# EUROPEAN PATENT APPLICATION

(11) **EP 4 239 720 A1**
(43) Date of publication of application: **06.09.2023**
(21) Application number: 21886655.6
(22) Date of filing: 18.10.2021
(51) Int. Cl.: H01M 4/36, H01M 4/38, H01M 4/587, H01M 4/62, H01M 10/052, C01B 33/02, C01B 32/05

(54) **ANODE ACTIVE MATERIAL COMPRISING SILICON COMPOSITE, PREPARATION METHOD THEREFOR, AND LITHIUM SECONDARY BATTERY COMPRISING SAME**

(30) Priority: 29.10.2020 KR 20200141630
(71) Applicant: Grapsil Co., Ltd., Chungcheongnam-do 31056 (KR)
(72) Inventor: KIM, Huijin, Asan-si Chungcheongnam-do 31463 (KR); PARK, Hyunki, Seoul 04338 (KR); HONG, Yohan, Gunsan-si Jeollabuk-do 54036 (KR); PARK, Jungsu, Mokpo-si Jeollanam-do 58613 (KR); LEE, Jonggeun, Gunsan-si Jeollabuk-do 54065 (KR)
(74) Representative: Viering, Jentschura & Partner mbB Patent- und Rechtsanwälte
(86) International application number: PCT/KR2021/014519
(87) International publication number: WO 2022/092661

(57) **Abstract**

The present invention relates to an anode active material comprising a silicon composite, a preparation method therefor, and a lithium secondary battery comprising same to have excellent lifespan characteristics, output characteristics and safety, the silicon composite comprising: a core formed by coating a first crystalline carbon on the surface of needle-shaped silicon nanoparticles and plate-shaped silicon nanoparticles that differ in aspect ratio; and a shell that surrounds the core and comprises amorphous carbon, in which a second crystalline carbon is positioned on the entire surface of the shell or a part thereof.

## Description

### Technical Field

The present disclosure relates to a highly conductive high-capacity anode active material containing a silicon composite, a manufacturing method thereof, and a lithium secondary battery including the same and thus having excellent lifespan, output, and safety characteristics.

The national research and development projects that supported the present disclosure are described below.
Project Number 1425136568
Project Serial Number S2832482
Government Department Ministry of SMEs and Startups, Republic of Korea
Specialized Institution for Project Management Korea Technology and Information Promotion Agency for SMEs
Title of Work (October) 2019 Tech Incubator Program for Startup (TIPS), Startup Team Support Project
Title of Project Development of carbon/Si nanocomposite and high-capacity (> 1300 mAh/g) anode material for secondary battery
Executing Organization Grapsil Co., Ltd.
Period 2019.12.01 ∼ 2021.11.30

### Background Art

Lithium secondary batteries are widely used as power sources for mobile electronic devices, including mobile phones, and are finding more applications because large devices such as electric vehicles increasingly use the lithium secondary batteries.

Meanwhile, most of the currently commercially available lithium secondary batteries use a carbon-based material as an anode active material. In particular, graphite exhibits highly reversible charge/discharge behaviors due to the uni-axial orientation of a graphite layer, thereby having good lifespan characteristics. In addition, since graphite exhibits a very similar potential to lithium metal, it is possible to obtain highenergy batteries when graphite is used in combination with a lithium metal cathode in a battery. However, despite these advantages, the low theoretical capacity (372 mAh/g) of graphite is an obstacle in increasing applications even at the present time at which high-capacity batteries are required.

Accordingly, there is an attempt to use a metal such as Si, Sn, and Al which exhibit a relatively high capacity as a material to replace the existing carbon-based anode active material. However, these metals exhibit repeated large volume changes during the intercalation and deintercalation of lithium, resulting in pulverization thereof and the loss of electrical conduction paths, thereby leading to a short cycle life and overall cell performance deterioration.

To solve this problem, many efforts have been made. For example, various carbon materials are simply mixed with silicon (Si), fine powdery silicon is chemically fixed on the carbon surface by a silane coupling agent, or amorphous carbon is deposited on the silicon surface through chemical vapor deposition (CVD) or the like.

However, in the case where a carbon material is simply mixed with silicon, carbon is liberated from silicon while Si undergoes large volume expansion and contraction during charging and discharging, which leads to reduction in electrical conductivity, resulting in a significant decrease in lifespan.

On the other hand, in the case where fine powdery silicon is chemically fixed on the carbon surface through CVD or using a coupling agent such as silane, the duration of bonding provided by the silane coupling agent or CVD is not so long, and the cycle life decreases with increase in the number of charging and discharging cycles. Moreover, there is a problem in that it is difficult to obtain a reliable anode material due to difficulty in attaining uniform physical and chemical bonding.

Despite these various attempts, there still remains the problem that electrodes are damaged due to the expansion of silicon during discharging.

Therefore, there is an increasing need for a high-capacity anode active material having excellent electrical conductivity and a lithium secondary battery having a long cycle life and good output characteristics and being highly safe by employing such an anode active material.

### Disclosure

### Technical Problem

The present disclosure is intended to disclose means for solving the problems of the existing technology described above and the technical problems that have not yet been solved.

Specifically, it is an objective of the present disclosure to provide a highly conductive high-capacity anode active material that includes a silicon composite.

Another objective of the present disclosure is to provide a method of manufacturing a highly conductive high-capacity anode active material including a silicon composite.

A further objective of the present disclosure is to provide a lithium secondary battery employing the anode active material, thereby having a long cycle life and good output characteristics and being highly safe.

### Technical Solution

The present disclosure provides an anode active material including a silicon composite:
a core including a needle-shaped silicon nanoparticle and a plate-shaped silicon nanoparticle that differ in aspect ratio and are coated with first-crystalline carbon; and
a shell surrounding the core and including amorphous carbon, in which second crystalline carbon is positioned in a partial or entire area of the surface of the shell.

The aspect ratio of the needle-shaped silicon nanoparticle may be in the range of from greater than 6 to 250, and the aspect ratio of the plate-shaped silicon nanoparticle may be in the range of from 1 to 6.

The weight ratio of the needle-shaped silicon nanoparticle and the plate-shaped silicon nanoparticle may be in the range of from 30:70 to 70:30.

The content of the amorphous carbon may be in the range of from 5 to 30 parts by weight with respect to 100 parts by weight of the needle-shaped silicon nanoparticle and the plate-shaped silicon nanoparticle.

The first crystalline carbon may be contained in an amount of 0.1 to 80 parts by weight and the second crystalline carbon may be contained in an amount of 0.1 to 80 parts by weight, with respect to 100 parts by weight of the needle-shaped silicon nanoparticle and the plate-shaped silicon nanoparticle.

The silicon composite may have an average particle size in the range of from 5 to 50 pm.

The silicon composite may have a porosity in the range of from 0.1% to 40%.

In addition, the present disclosure provides a method of preparing an anode active material, the method including:
(a) preparing a core by coating, with first crystalline carbon, the surface of a needle-shaped silicon nanoparticle and the surface of a plate-shaped silicon nanoparticle that differ in aspect ratio;
(b) heat treating the prepared core after adding a precursor of amorphous carbon to the prepared core, thereby forming a shell made of amorphous carbon and surrounding the core; and
(c) adding second crystalline carbon after forming the shell and performing heat treatment, thereby obtaining a silicon composite in which the surface of the shell is partially or locally provided with the second crystalline carbon.

The silicon composite characterized in including a silicon composite including needle-shaped silicon nanoparticles having an aspect ratio in the range of from greater than 6 to 250 and plate-shaped silicon nanoparticles having an aspect ratio in the range of from 1 to 6.

The weight ratio of the needle-shaped silicon nanoparticle and the plate-shaped silicon nanoparticle may be in the range of from 30:70 to 70:30.

The content of the precursor of the amorphous carbon may be in the range of from 5 to 30 parts by weight with respect to 100 parts by weight of the needle-shaped silicon nanoparticle and the plate-shaped silicon nanoparticle.

The first crystalline carbon may be contained in an amount of 0.1 to 80 parts by weight and the second crystalline carbon may be contained in an amount of 0.1 to 80 parts by weight, with respect to 100 parts by weight of the needle-shaped silicon nanoparticle and the plate-shaped silicon nanoparticle.

The silicon composite may have an average particle size in the range of from 5 to 50 pm.

The silicon composite may have a porosity in the range of from 0.1% to 40%.

The present disclosure also provides a lithium secondary battery including the anode active material.

### Advantageous Effects

Since the anode active material according to the present disclosure has the core made from needle-shaped silicon nanoparticles and plate-shaped silicon nanoparticles that differ in aspect ratio, the pores are minimized and thus the capacity per unit volume is maximized. Therefore, a lithium secondary battery employing the anode active material has improved lifespan characteristics. In addition, since the fine pores serve as a movement channel for lithium ions, the lithium secondary battery exhibits good initial efficiency and output characteristics.

According to the present disclosure, the anode active material has a core-shell structure, in which the surface of the silicon particle of the core is coated with first crystalline carbon, and the shell is made of amorphous carbon and provided with second crystalline carbon in a local area or the entire area of the surface thereof. Therefore, although the shrinkage and expansion of the silicon particles repeatedly occur due to intercalation and deintercalation of lithium ions during charging and discharging of cells, the volume expansion and damage of the silicon particles can be suppressed by the buffering action. Therefore, the anode active material has good durability, thereby inhibiting electrode damage. This may result in improvement in safety of lithium secondary batteries.

### Description of Drawings

FIG. 1 is a schematic diagram illustrating a cross-section of an anode active material including a silicon composite according to one embodiment of the present disclosure;
FIG. 2A is a SEM image of a needle-shaped silicon nanoparticle, a plate-shaped silicon nanoparticle, and a mixed state thereof in Example 1;
FIG. 2B is an SEM image of a silicon composite prepared in Example 1;
FIGS. 3A, 3B, and 3C show the pore distribution in powder during pore measurement, the pore distribution during mercury infusion, and the pore distribution during mercury discharge, in Experiment Example 2;
FIG. 4 shows a result of capacity measurement according to Experimental Example 3;
FIG. 5 shows a result of electrical conductivity measurement according to Experimental Example 5-1; and
FIG. 6 shows a result of capacity retention rate (CCR) measurement according to Experimental Example 5-2.

### Best Mode

### Anode Active Material

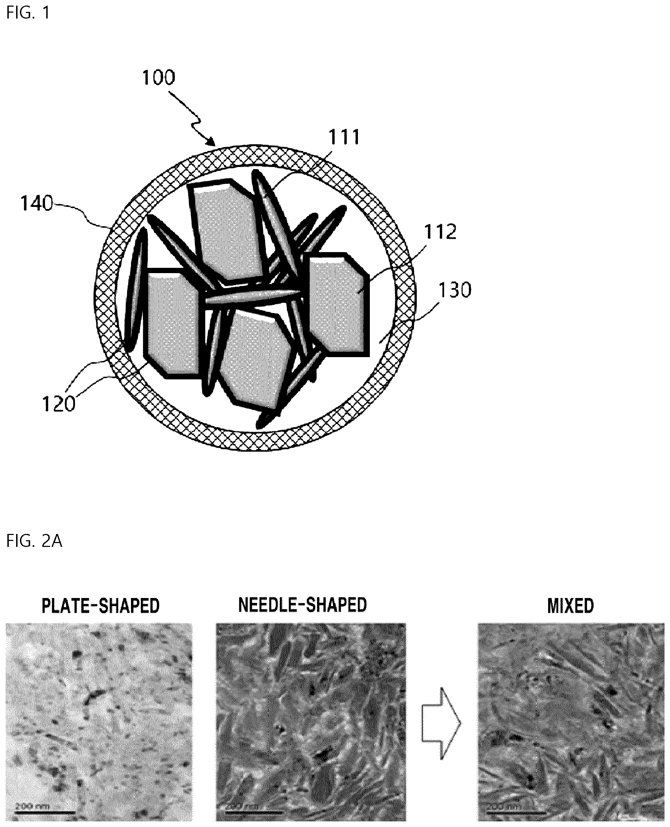

FIG. 1 is a schematic diagram schematically illustrating a cross-section of an anode active material including a silicon composite 100 according to an embodiment of the present disclosure, but the present invention is not limited thereto.

Referring to FIG. 1, the present disclosure provides an anode active material including a core and a shell. The core includes needle-shaped silicon nanoparticles 111 and plate-shaped silicon nanoparticles 112 that differ in aspect ratio and are coated with first crystalline carbon on the surface thereof. The shell surrounds the core and is made of amorphous carbon 130. The surface of the shell is entirely or partially covered with second crystalline carbon 140.

Silicon exhibits a theoretical capacity of about 3,600 mA/g which is higher than those of conventional carbon-based anode materials but has a problem in that it exhibits a large volume change during intercalation and deintercalation of lithium ions, resulting in pulverization of silicon and loss of an electrical conduction path which leads to deterioration in the lifespan characteristics.

The anode active material according to the present disclosure includes a core in which a plurality of secondary particles is arranged. Each of the secondary particles include a primary particle having a needle shape or a plate shape and a coating layer first crystalline carbon 120. The needle-shaped silicon nanoparticle 111 and the plate-shaped silicon nanoparticle 112 differ in aspect ratio. Therefore, the pores are minimized and thus the capacity per unit volume is maximized, resulting in improvement in lifespan characteristics of a lithium secondary battery. In addition, since the fine pores serve as a movement channel for lithium ions, the lithium secondary battery exhibits good efficiency and output characteristics.

In the present invention, the "needle shape" or "plate shape" may be an approximate needle shape or an approximate plate shape and does not have to be a perfect needle shape or a perfect plate shape. The surface of the needle or plate shape may be uneven. The needle-shaped silicon nanoparticle 111 and the plate-shaped silicon nanoparticle 112 may be defined with an aspect ratio. This "aspect ratio" refers to the value obtained by dividing the size of the long side of the silicon nanoparticle by the size of the short side.

For example, the aspect ratio of the needle-shaped silicon nanoparticles 111 may be in the range of from greater than 6 to 250, and the aspect ratio of the plate-shaped silicon nanoparticles 112 may be in the range of from 1 to less than 6. When the aspect ratios are out of the above ranges, the pore reduction effect intended by the present invention cannot be achieved through the arrangement of the particles, and the bond between the silicon nanoparticles may be weakened and the cycle characteristics may be deteriorated, which are undesirable.

Specifically, in the present disclosure, the needle-shaped silicon nanoparticles 111 of the primary particles are about 190 to 250 nm in length and are about 1 to 30 nm in width, and plate-shaped silicon nanoparticles of the primary particles are about 150 to 240 nm in length and are about 40 to 100 nm in width. More particularly, the needle-shaped silicon nanoparticles 111 are about 190 to 220 nm in length and are about 1 to 30 nm in width, and plate-shaped silicon nanoparticles are about 180 to 220 nm in length and are about 40 to 100 nm in width. When the above-mentioned ranges are satisfied, the pores between the secondary particles can be minimized, resulting in increase in capacity and improvement in initial efficiency.

The weight ratio of the needle-shaped silicon nanoparticles 111 and the plate-shaped silicon nanoparticles 112 may be in the range of from 30:70 to 70:30. When the amount of the needle-shaped silicon nanoparticles 111 is excessively large, there is a risk of severe undifferentiation during the charging and discharging of the cell. When the amount of the plate-shaped silicon nanoparticles 112 is excessively large, there is a risk that the economic feasibility will be deteriorated. In addition, when the above ranges are not satisfied, it is not desirable because the intended effect of minimizing the pores through the arrangement of the silicon particles having different aspect ratios cannot be achieved. Specifically, the weight ratio of the needle-shaped silicon nanoparticles 111 and the plate-shaped silicon nanoparticles 112 may be in the range of from 40:60 to 60:40.

The anode active material according to the present disclosure has a core-shell structure. The core includes silicon nanoparticles having different aspect ratios and being coated with the first crystalline carbon 120, and the shell is made of amorphous carbon 130 and entirely or partially covered with the second crystalline carbon 140. Therefore, even though shrinkage and expansion of silicon particles repeatedly occur due to intercalation and deintercalation of lithium ions during charging and discharging of a cell, the volume expansion and damage of the silicon particles may be inhibited due to the buffering effect. This may result in improvement in durability of silicon particles, and thus electrode damage can be minimized. In addition, since the contact between the silicon particles and the electrolyte is inhibited, the safety of the lithium secondary battery may be improved.

According to the present disclosure, since a partial area or the entire area of the surface of each of the needle-shaped silicon nanoparticle 111 and the plate-shaped silicon nanoparticle 112 that differ in aspect ratio is coated with the first crystalline carbon 120 to form a conductive path, electrical conductivity is improved.

The first crystalline carbon 120 may be contained in an amount of 0.1 to 80 parts by weight, with respect to 100 parts by weight of the needle-shaped silicon nanoparticles 111 and the plate-shaped silicon nanoparticles 112. When the content of the first crystalline carbon 120 is excessively low, it is difficult to achieve the intended effect of improving electrical conductivity. When the content of the first crystalline carbon 120 is excessively high, the lithium ion conductivity is reduced, resulting in deterioration in output characteristics. The first crystalline carbon 120 may be contained preferably in an amount of 1 to 30 parts by weight with respect to 100 parts by weight of the needle-shaped silicon nanoparticles 111 and the plate-shaped silicon nanoparticles 112 and more preferably in an amount of 1 to 3 parts by weight.

As the first crystalline carbon 120, any carbon material known in the art can be used without particular limitations. For example, one or more kinds of carbon selected from the group consisting of, but not limited to, natural graphite, synthetic graphite, expanded graphite, graphene, and fullerene soot. Specifically, it may be graphene, which is a monolayer of graphite.

The amorphous carbon 130 may form a covering film on the entire surface of a secondary particle constituting the core. In some cases, the amorphous carbon 130 may be located between the primary particles. The amorphous carbon 130 may impart sufficient strength to maintain the shape of the core-shell structure, thereby inhibiting the expansion of the core.

The content of the amorphous carbon 130 may be in the range of from 5 to 30 parts by weight with respect to 100 parts by weight of the needle-shaped silicon nanoparticles and the plate-shaped silicon nanoparticles. When the content of the amorphous carbon 130 is lower than the above range, the core cannot be sufficiently surrounded by the amorphous carbon. In this case, there is an increasing risk that the electrolyte and the anode active material can react with each other. This may result in deterioration in cycle characteristics. When the content of the amorphous carbon 130 is excessively high, it is not desirable because the dispersion stability can be reduced.

As the first amorphous carbon 130, any amorphous carbon known in the art can be used without limitation. For example, any one material or a combination of two or more materials selected from the group consisting of soft carbon, hard carbon, pitch carbide, mesophase pitch carbide, and fired coke may be used. Particularly, pitch carbide may be used. More particularly, pitch carbide derived from petroleum-based pitch may be used. The petroleum-based pitch can be obtained by rectifying the crude oil and removing the impurity components from the remaining high-boiling point residue.

The second crystalline carbon 140 may form a covering film on the entire area or a local area of the shell made of the amorphous carbon 130.

The content of the second crystalline carbon may be in the range of from 0.1 to 80 parts by weight with respect to 100 parts by weight of the needle-shaped silicon nanoparticles 111 and the plate-shaped silicon nanoparticles 112. When the content of the second crystalline carbon is lower than the above range, the shell cannot be sufficiently covered with the second crystalline carbon. In this case, there is an increasing risk that the electrolyte and the anode active material can react with each other. This may result in deterioration in cycle characteristics. On the other hand, it is not desirable that the content is excessively high because cycle characteristics and reaction processability are likely to be deteriorated. The second crystalline carbon may be contained preferably in an amount of 0.1 to 30 parts by weight with respect to 100 parts by weight of the needle-shaped silicon nanoparticles 111 and the plate-shaped silicon nanoparticles and more preferably in an amount of 0.1 to 3 parts by weight.

As the second crystalline carbon 140, any known carbon material can be used without particular limitations. For example, one or more kinds of carbon selected from the group consisting of, but not limited to, natural graphite, synthetic graphite, expanded graphite, graphene, and fullerene soot. Specifically, it may be graphene, which is a monolayer of graphite.

The average particle size of the silicon composite in the present disclosure is not particularly limited, but may be, for example, in the range of from 5 and 50 µm. When the average particle size of the silicon composite is excessively small (i.e., smaller than the above range), the reactivity between the electrolyte and the anode active material may be high, thereby degrading the cycle characteristics. When the average particle size of the silicon composite is excessively large, the dispersion stability may be reduced and the surface of the anode may be roughened. Specifically, the average particle size may be in the range of from 5 to 20 pm.

In the present disclosure, the silicon composite may have a porosity in the range of from 0.1% to 40%. Here, the porosity refers to the value represented by "(the pore volume per unit mass) / (specific volume + pore volume per unit mass)" and can be measured by the mercury porosimerty test or the Bruanuer-Emmett-Teller (BET) test. That is, since the core, which is a secondary particle, is made from primary particles, which are silicon nanoparticles having different aspect ratios, the pores present in the secondary particles can be minimized, and thus the capacity per unit volume can be maximized. In addition, since the fine pores can serve as a movement channel for lithium ions, the initial efficiency can be increased. Therefore, when the porosity falls outside the above range, both of the effects of increasing capacity and initial efficiency cannot be obtained at the same time. Specifically, the porosity may be in the range of from 0.1% to 4%.

### Method of Preparing Anode Active Material.

The present disclosure provides a method of preparing an anode active material, the method including:
(a) preparing a core by coating, with first crystalline carbon, the surface of a needle-shaped silicon nanoparticle and the surface of a plate-shaped silicon nanoparticle that differ in aspect ratio;
(b) heat treating the prepared core after adding a precursor of amorphous carbon to the prepared core, thereby forming a shell made of amorphous carbon and surrounding the core; and
(c) adding second crystalline carbon after forming the shell and performing heat treatment, thereby obtaining a silicon composite in which the surface of the shell is partially or locally provided with the second crystalline carbon.

In the core, a plurality of secondary particles is arranged, in which the secondary particles are formed by coating primary particles including needle-shaped silicon nanoparticles and plate-shaped silicon nanoparticles that differ in aspect ratio with first crystalline carbon.

The anode active material according to the present disclosure includes a core in which secondary particles are arranged. The secondary particles are obtained by coating primary particles including needle-shaped silicon nanoparticles and plate-shaped silicon nanoparticles that differ in aspect ratio with the first crystalline carbon 120. Therefore, the anode active material has minimized pores and maximized capacity per unit volume, thereby improving the lifespan characteristics of a lithium secondary battery. In addition, since the fine pores serve as a movement channel for lithium ions, the lithium secondary battery exhibits good initial efficiency.

In step (a), the needle-shaped silicon nanoparticles and the plate-shaped silicon nanoparticles may be obtained through a milling process.

The aspect ratio of the needle-shaped silicon nanoparticle may be in the range of from greater than 6 to 250, and the aspect ratio of the plate-shaped silicon nanoparticle may be in the range of from 1 to less than 6. When the aspect ratios are out of the above ranges, the pore reduction effect intended by the present invention cannot be achieved through the arrangement of the particles, and the bond between the silicon nanoparticles may be weakened and the cycle characteristics may be deteriorated, which are undesirable.

Specifically, in the present disclosure, the needle-shaped silicon nanoparticles 111 of the primary particles are about 190 to 250 nm in length and are about 1 to 30 nm in width, and the plate-shaped silicon nanoparticles of the primary particles are about 150 to 240 nm in length and are about 40 to 100 nm in width. More particularly, the needle-shaped silicon nanoparticles are about 190 to 220 nm in length and are about 1 to 30 nm in width, and the plate-shaped silicon nanoparticles are about 180 to 220 nm in length and are about 40 to 100 nm in width. When the above-mentioned ranges are satisfied, the pores between the secondary particles can be minimized, resulting in increase in capacity and improvement in initial efficiency.

The weight ratio of the needle-shaped silicon nanoparticle and the plate-shaped silicon nanoparticle may be in the range of from 30:70 to 70:30. When the amount of the needle-shaped silicon nanoparticles is excessively large, there is a risk of severe undifferentiation during charging and discharging of a battery cell. When the amount of the plate-shaped silicon nanoparticles is excessively large, there is a risk that the economic feasibility will be deteriorated. In addition, when the above ranges are not satisfied, it is not desirable because the intended effect of minimizing the pores through the arrangement of the silicon particles having different aspect ratios cannot be achieved. Specifically, polycrystalline silicon grains and monocrystalline silicon grains 112 may be blended in a weight ratio in the range of from 40:60 to 60:40 based on weight.

The anode active material according to the present disclosure has a core-shell structure. The core includes silicon nanoparticles having different aspect ratios and being coated with first crystalline, and the shell is made of amorphous carbon and entirely or partially provided with second crystalline carbon. Therefore, even though shrinkage and expansion of silicon particles repeatedly occur due to intercalation and deintercalation of lithium ions during charging and discharging of a cell, the volume expansion and damage of the silicon particles may be inhibited due to the buffering effect. This may result in improvement in durability of silicon particles, and thus electrode damage can be minimized. In addition, since the contact between the silicon particles and the electrolyte is inhibited, the safety of the lithium secondary battery may be improved.

In step (a), since a partial area or the entire area of the surface of each of the needle-shaped silicon nanoparticles and the plate-shaped silicon nanoparticles that differ in aspect ratio is coated with the first crystalline carbon to form a conductive path, electrical conductivity is improved.

Any coating method known in the art may be used without particular limitations. For example, a dry coating method such as deposition, chemical vapor deposition (CVD) method, or a liquid coating method such as impregnation, spraying, etc., can be used.

The first crystalline carbon 120 may be contained in an amount of 0.1 to 80 parts by weight, with respect to 100 parts by weight of the needle-shaped silicon nanoparticles 111 and the plate-shaped silicon nanoparticles 112. When the content of the first crystalline carbon 120 is excessively low, it is difficult to achieve the intended effect of improving electrical conductivity. When the content of the first crystalline carbon 120 is excessively high, the lithium ion conductivity is reduced, resulting in deterioration in output characteristics. The first crystalline carbon 120 may be contained preferably in an amount of 1 to 30 parts by weight with respect to 100 parts by weight of the needle-shaped silicon nanoparticles 111 and the plate-shaped silicon nanoparticles 112, and more preferably in an amount 1 to 3 parts by weight. More specifically, the first crystalline carbon may be contained in an amount of 1 t

As the first crystalline carbon, any carbon material known in the art can be used without particular limitations. For example, one or more kinds of carbon selected from the group consisting of, but not limited to, natural graphite, synthetic graphite, expanded graphite, graphene, and fullerene soot. Specifically, it may be graphene, which is a monolayer of graphite.

In step (a), the heat treatment for the first crystalline carbon coating may be performed in an inert atmosphere at 100°C to 400°C for 1 to 3 hours. When the coating is performed at an excessively low temperature that is lower than the lower limit of the above-mentioned range, it is not desirable because there is a risk that the coating may not be sufficiently performed. On the other hand, the coating is performed at an excessively high temperature, the process efficiency may be reduced.

Step (b) is a heat treatment process performed after adding a precursor of amorphous carbon. By performed step (b), an amorphous carbon shell surrounding the secondary particles is formed.

Any coating method known in the art may be used without particular limitations. For example, a dry coating method such as deposition or chemical vapor deposition (CVD) method, or a liquid coating method such as impregnation or spraying may be used.

Amorphous carbon can impart sufficient strength to maintain the shape of the core-shell structure, thereby inhibiting the expansion of the core. A precursor of the amorphous carbon may be one or more materials selected from the group consisting of coal-based pitch, mesophase pitch, petroleum-based pitch, coal-based oil, petroleum-based heavy oil, organic synthetic pitch, phenol resin, furan resin, and polyimide resin.

The content of the amorphous carbon may be in the range of from 5 to 30 parts by weight with respect to 100 parts by weight of the needle-shaped silicon nanoparticles and the plate-shaped silicon nanoparticles. When the content of the amorphous carbon is lower than the above range, the core cannot be sufficiently covered by the amorphous carbon. In this case, there is an increasing risk that the electrolyte and the anode active material can react with each other. This may result in deterioration in cycle characteristics. When the content of the amorphous carbon is excessively high, it is not desirable because the dispersion stability can be reduced.

As the first amorphous carbon, any amorphous carbon known in the art can be used without particular limitations. For example, any one material or a combination of two or more materials selected from the group consisting of soft carbon, hard carbon, pitch carbide, mesophase pitch carbide, and fired coke may be used. Particularly, pitch carbide may be used. More particularly, pitch carbide derived from petroleum-based pitch may be used. The petroleum-based pitch can be obtained by rectifying the crude oil and removing the impurity components from the remaining high-boiling point residue.

In step (b), the amorphous carbon precursor is added, and the heat treatment is performed in an inert atmosphere at a temperature in the range of from 600°C to 1300°C to remove impurities so that a shell made of amorphous carbon may be formed to surround the core. For example, when petroleum-based pitch is used as the amorphous carbon precursor, the carbide of the pitch may be formed as the amorphous carbon through the heat treatment.

In step (c), after the core-shell structure is formed, second crystalline carbon is added, and heat treatment is performed so that a silicon composite in which the second crystalline carbon is disposed in the entire area or a partial area of the surface of the shell may be prepared.

The second crystalline carbon may form a conductive channel, thereby further improving electrical conductivity.

The content of the second crystalline carbon may be in the range of from 0.1 to 80 parts by weight with respect to 100 parts by weight of the needle-shaped silicon nanoparticles and the plate-shaped silicon nanoparticles. When the content of the second crystalline carbon is lower than the above range, the shell cannot be sufficiently covered by the second crystalline carbon. In this case, there is an increasing risk that the electrolyte and the anode active material can react with each other. This may result in deterioration in cycle characteristics. On the other hand, it is not desirable that the content of the second crystalline carbon is excessively high because cycle characteristics and reaction processibility are likely to be deteriorated. The second crystalline carbon may be contained preferably in an amount of 0.1 to 30 parts by weight with respect to 100 parts by weight of the needle-shaped silicon nanoparticles and the plate-shaped silicon nanoparticles and more preferably in an amount of 0.1 to 3 parts by weight.

As the second crystalline carbon, any carbon material known in the art can be used without particular limitations. For example, one or more kinds of carbon selected from the group consisting of, but not limited to, natural graphite, synthetic graphite, expanded graphite, graphene, and fullerene soot. Specifically, it may be graphene, which is a monolayer of graphite.

In step (c), the heat treatment may be performed in an inert atmosphere at a temperature in the range of from 100°C to 400°C for 1 to 3 hours. When the coating is performed at an excessively low temperature that is lower than the lower limit of the above-mentioned range, it is not desirable because there is a risk that the structural stability of the prepared silicon composite coating is deteriorated. On the other hand, when the coating is performed at an excessively high temperature, the process efficiency may be reduced.

The average particle size of the silicon composite in the present disclosure is not particularly limited, but may be, for example, in the range of from 5 and 50 µm. When the average particle size of the silicon composite is excessively small (i.e., smaller than the above range), the reactivity between the electrolyte and the anode active material may be high, thereby degrading the cycle characteristics. When the average particle size of the silicon composite is excessively large, the dispersion stability may be reduced and the surface of the anode may be roughened. Specifically, the average particle size may be in the range of from 5 to 20 pm.

In the present disclosure, the silicon composite may have a porosity in the range of from 0.1% to 40%. Here, the porosity refers to the value represented by "(the pore volume per unit mass) / (specific volume + pore volume per unit mass)" and can be measured by the mercury porosimerty test or the Bruanuer-Emmett-Teller (BET) test. That is, since the core, which is a secondary particle, is made from primary particles, which are silicon nanoparticles having different aspect ratios, the pores present in the secondary particles can be minimized, and thus the capacity per unit volume can be maximized. In addition, since the fine pores can serve as a movement channel for lithium ions, the initial efficiency can be increased. Therefore, when the porosity falls outside the above range, both of the effects of increasing capacity and initial efficiency cannot be obtained at the same time. Specifically, the porosity may be in the range of from 0.1% to 4%.

### Lithium Secondary Battery

The present invention provides a lithium secondary battery including the anode active material.

The lithium secondary battery may include a cathode containing a cathode active material, an anode containing the anode active material, and an electrolyte.

The cathode is formed by applying a cathode preparation mixture including a cathode active material to a current collector, and the cathode preparation mixture may further include a binder and a conductive material, if necessary.

The cathode active material is, for example, a lithium metal oxide (0<x<1, 0<y<1) such as LiNi_{0.8-x}CO_{0.2}AlxO₂, LiCoₓMn_{y}O₂, LiNiₓCo_{y}O₂, LiNiₓMn_{y}O₂, LiNiₓCo_{y}Mn_{z}O₂, LiCoO₂, LiNiO₂, LiMnO₂, LiFePO₄, LiCoPO₄, LiMnPO₄, or Li₄Ti₅O₁₂. Alternatively, the cathode active material may be a chalcogenide such as Cu₂MO₆S₈, FeS, CoS, or MiS. Further alternatively, the cathode active material may be any one selected from among oxides, sulfides, and halides of scandium, ruthenium, titanium, vanadium, molybdenum, chromium, manganese, iron, cobalt, nickel, copper, zinc, etc. More specifically, LiNi_{0.8}Co_{0.1}Mn_{0.1}O₂, TiS₂, ZrS₂, RuO₂, Co₃O₄, Mo₆S₈, and V₂O₅, etc. may be used as the cathode active material, but the cathode active material is not limited thereto.

The shape of the cathode active material is not particularly limited. That is, the cathode active material may be in the form of particulate. For example, the shape of the cathode active material may be a spherical shape, an oval shape, or a rectangular parallelepiped shape. The average particle size of the cathode electrode active material may be in the range of 1 to 50 pm, but is not limited thereto. The average particle size of the cathode active material can be obtained by measuring the sizes of the particles of the active material with a scanning electron microscope (SEM), and calculating an average value thereof.

The binder is not particularly limited. A fluorinecontaining binder such as polyvinylidene fluoride (PVDF) and polytetrafluoroethylene (PTFE) may be used, but the binder is not limited thereto.

The content of the binder is not particularly limited as long as the binder can bind the cathode active material. The content may be in the range of 0% to 10% by weight with respect to the total weight of the cathode.

The conductive material is not particularly limited as long as the conductivity of the cathode can be improved. For example, nickel powder, cobalt oxide, titanium oxide, carbon, and the like may be used. The carbon, specifically, may be any one or a combination of two or more selected from the group consisting of Ketjen black, acetylene black, furnace black, graphite, carbon fiber, and fullerene.

The content of the conductive material may be determined in consideration of other battery conditions such as the type of the conductive material. For example, the content may be in the range of 1% to 10% by weight with respect to the total weight of the cathode.

The thickness of a layer made of the cathode preparation mixture including the cathode active material, the binder, and the conductive material may be, for example, in the range of from 0.1 to 1000 µm when the cathode preparation mixture is applied on the current collector.

In some cases, in the present invention, the cathode preparation mixture may include 0.1% to 60% by weight, specifically 10% to 50% by weight, of a solid electrolyte with respect to the total weight of the cathode preparation mixture.

The thickness of the layer of the cathode preparation mixture may be, for example, in the range of from 0.1 to 1000 pm.

The material of the cathode current collector is not particularly limited as long as it has high conductivity without causing chemical change in the battery. For example, stainless steel, aluminum, nickel, titanium, or fired carbon may be used. Alternatively, a base member of the cathode current collector is made of stainless steel, aluminum, nickel, titanium, or fired carbon, and the surface of the base member may be treated with carbon, nickel, titanium, silver, or the like. In addition, the cathode current collector may take an arbitrary form such as a film, a sheet, a foil, a net, a porous body, a foam, or a non-woven body, and the surface of such a cathode current collector may have fine irregularities.

An anode may be formed by applying an anode preparation mixture including the anode active material according to the present disclosure on an anode current collector. The anode preparation mixture may further include a binder and a conductive material that are the same as described above, if necessary.

The material of the anode current collector is not particularly limited as long as it has conductivity and does not cause chemical change in the battery. For example, copper, stainless steel, aluminum, nickel, titanium, or fired carbon may be used. Alternatively, a base member of the anode current collector is made of copper or stainless steel, and carbon, nickel, titanium, silver, or the like may be formed on the copper or stainless steel base member. In addition, similarly to the cathode current collector, the anode current collector may take an arbitrary form such as a film, a sheet, a foil, a net, a porous body, a foam, and a non-woven body, and the surface of such an anode current collector may have fine irregularities.

The electrolyte is composed of an organic solvent and an electrolyte material.

The organic solvent is not particularly limited if it is a commonly used one. For example, one or more materials selected from the group consisting of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxy ethane, diethoxyethane, vinylene carbonate, sulfolane, gamma-butyrolactone, propylene sulfite, and tetrahydrofuran may be used.

There is no limitation as long as a lithium salt that may be included as the electrolyte is commonly used. For example, as an anion of the lithium salt, one or more types of anions selected from the group consisting of F⁻, Cl⁻, I⁻, NO³⁻, N(CN)²⁻, BF⁴⁻, ClO⁴⁻, PF⁶⁻, (CF₃)₂PF⁴⁻, (CF₃)₃PF³⁻, (CF₃)₄PF²⁻, (CF₃)₅PF⁻, (CF₃)₆P⁻, CF₃SO³⁻, CF₃CF₂SO³⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO³⁻, CF₃CO²⁻, CH₃CO²⁻, SCN-, and (CF₃CF₂SO₂)₂N⁻ may be used.

A battery structure is formed by arranging a separator between the cathode and the anode, and the battery structure is wound or folded, and is then placed in a cylindrical battery case or a prismatic battery case. Next, the electrolyte is injected into the battery case to complete a secondary battery. Alternatively, a lithium secondary battery is completed by stacking the battery structures in the form of a bi-cell structure, impregnating the bi-cell structure with the electrolyte, and sealing the obtained result in a pouch.

Although a description will be made with reference to the following examples, the following examples are for the purpose of illustrating the present invention, and the scope of the present invention is not limited thereto.

### [Example 1]

Needle-shaped silicon nanoparticles (200 nm in length and 1 to 30 nm in width) and plate-shaped silicon nanoparticles (200 nm in length and 40 to 100 nm in width) were mixed at a weight ratio of 2:2. 1.5 parts by weight of graphene per 100 parts by weight of the needle-shaped silicon nanoparticles and the plate-shaped silicon nanoparticles was added, and heat treatment was performed in an inert atmosphere at 250°C for 2 hours to form cores.

Next, 20 parts by weight of pitch was added per 100 parts by weight of the needle-shaped silicon nanoparticles and the plate-shaped silicon nanoparticles, and heat treatment was performed in an inert atmosphere at 935°C for 3 hours to form shells surrounding the cores and being made of amorphous carbon, which is a carbide of pitch.

Next, 0.5 parts by weight of graphene was added per 100 parts by weight of the needle-shaped silicon nanoparticle and the plate-shaped silicon nanoparticles, and heat treatment was performed in an inert atmosphere at 250°C for 2 hours to produce a silicon composite including a graphene film formed on the entire surface of the core-shell structures.

### (Comparative Example 1)

A silicon composite was prepared in the same manner as in Example 1, except that only needle-shaped silicon nanoparticles having a length of 200 nm and a width of 1 to 30 nm were used as the silicon particles.

### (Comparative Example 2)

A silicon composite was prepared in the same manner as in Example 1, except that only plate-shaped silicon nanoparticles having a length of 200 nm and a width of 40 to 100 nm were used as the silicon particles.

### (Comparative Example 3)

A silicon composite was prepared in the same manner as in Example 1 except that the core-shell structures were not covered with the graphene film.

### <Experimental Example 1>

In Example 1, SEM images of needle-shaped silicon nanoparticles, plate-shaped silicon nanoparticles, and a state in which the needle-shaped silicon nanoparticles and the plate-shaped silicon nanoparticles were mixed were obtained. The SEM images are shown in FIG. 2A.

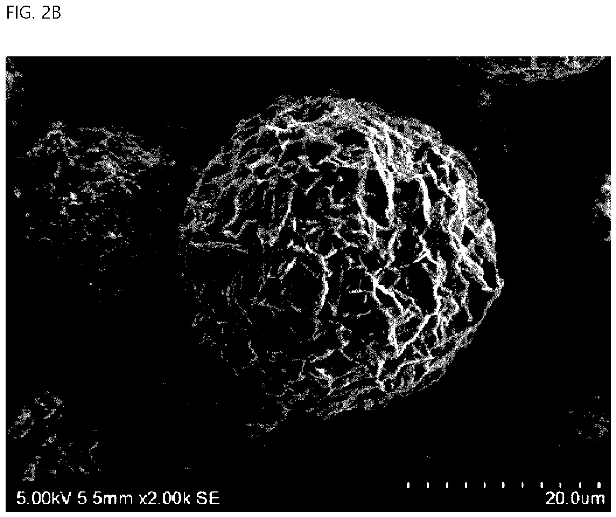

In addition, an SEM image of the silicone composites prepared in Example 1 is shown in FIG. 2B. The average particle size of the silicon composite was 8 µm.

### <Experimental Example 2>

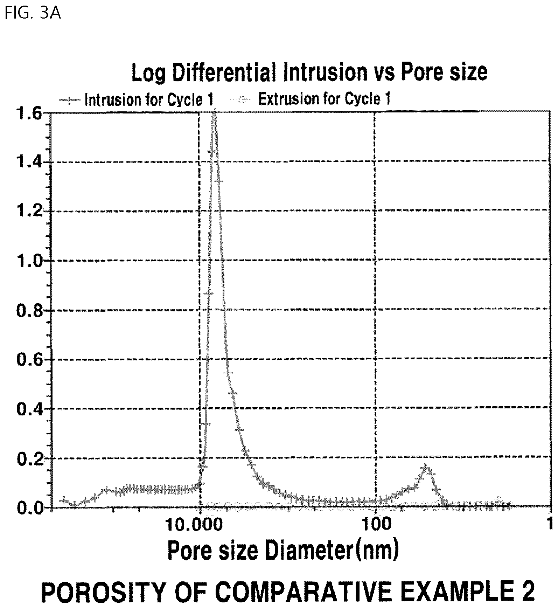

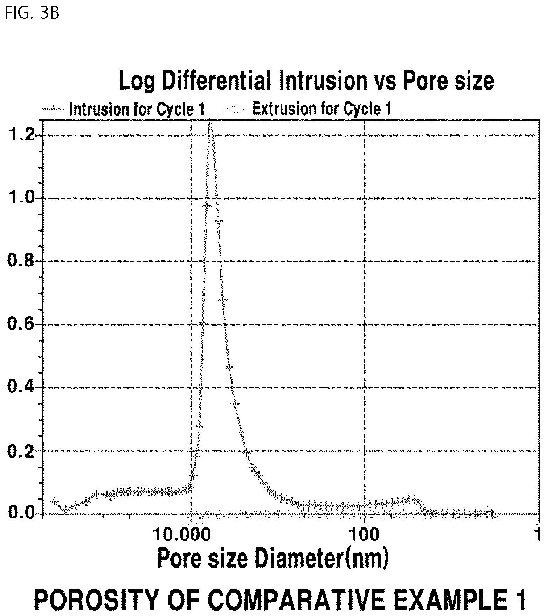

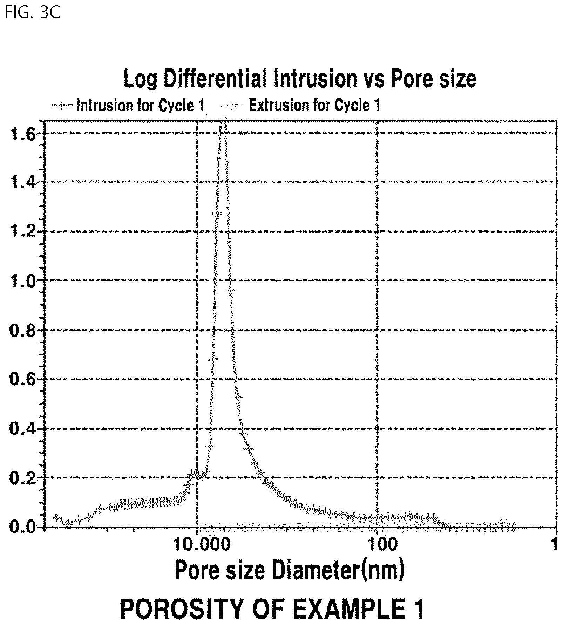

The porosity of each of the silicone composites prepared in Example 1, Comparative Example 1, and Comparative Example 2 was measured, and the results are shown in Table 1 and FIGS. 3A, 3B, and 3C. The porosity was measured as follows: A rod was inserted into a cylinder vessel with a hole in the center, powder was loaded in amount in the range of from 0.20 g to 0.21 g. The vessel was then loaded into a cylinder vessel loading unit in low power mode, and mercury was infused into the cylinder vessel. The mercury-charged cylinder vessel is loaded into a loading portion of micromeritics instrument. After the loading, an argon gas atmosphere was created, the external pressure was constantly increased so that mercury was infused into the void of powder. During mercury infusion, the porosity was measured. The pressure was then gradually lowered to discharge mercury. However, the measurement result does not show the pore distribution.

**[Table 1]**

| | Comparative Example 2 (plate-shaped) | Comparative Example 1 (needle-shaped) | Example 1 (plate-shaped and needle-shaped) |
|---|---|---|---|
| Total amount of mercury infused | 0.5716 mL/g | 0.5584 mL/g | 0.6754 mL/g |
| Amount of mercury infused into pores having sizes smaller than or equal to 100 nm | 0.0522 mL/g | 0.0231 mL/g | 0.0230 mL/g |
| Porosity | 9.13% | 4.140 | 3.40% |

The x-axis in each of FIGS. 3A to 3C indicates the pore size of the powder, and the axis shows the volume (mL) of the corresponding pore size. The red line indicates the result of the pores measured during mercury infusion, and the green line indicates the result of the pores measured when mercury is discharged by lowering the internal pressure of the cylinder vessel. In particular, referring to Table 1, it can be seen that the porosity of the silicon composite of Example 1 is the lowest, and the filling rate is the highest. That is, the capacity can be improved.

### <Experimental Example 3>

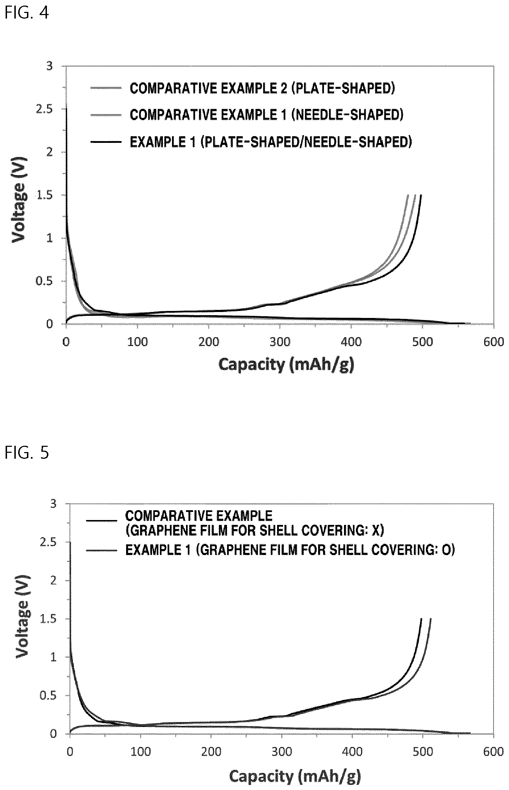

Each of several anode preparation mixtures was prepared by mixing one of the silicon composites prepared according to Example 1, Comparative Example 1, and Comparative Example 2, graphite, a conductive material, CMC, and SBR in a weight ratio of 16.2:75.8:5:1.5:1.5. Anode plates were made from the respective anode preparation mixtures and cut into circular electrodes to serve as anodes. Cathodes having the same size and shape as the anodes were made from a lithium metal thin film. Here, lithium coin half-cells were manufactured under the following conditions, and the capacity and initial efficiency of each of the half-cells were measured. The results are shown in Table 2 and FIG. 4.
- Silicon composite (1300 mAh/g) : 16.02% by weight, Graphite (360 mAh/g): 75.8% by weight, Conductive material (330 mAh/g): 5% by weight, CMC: 1.5% by weight, SBR (40% by weight of solids): 1.5% by weight (solution basis: 3.75)
- Loading level (L/L) = 5.39 g/cm², press density (E/D) = 1.54 g/cc
- Electrolyte: 1M LiPF₆ in EC : DEC = 1 : 1 + FEC 5% by weight
- Char: CC/CV, 0.1C / 0.01V, 0.01C cut-off
- Disch: CC, 0.1 C / 1.5 V cut-off

**[Table 2]**

| | Initial efficiency (%) |
|---|---|
| Comparative Example 2 (plate-shaped) | 84.7 |
| Comparative Example 1 (needle-shaped) | 86.5 |
| Example 1 (plate-shaped and needle-shaped) | 89.3 |

Referring to FIG. 4 and Table 2, it can be seen that the capacity and initial efficiency of the cell using the silicon composite of Example 1 is the highest.

### <Experimental Example 4-1>

The silicon composites prepared in Example 1 and Comparative Example 3, respectively, were applied on 5 cm x 5 cm copper electrode plates, and electrical conductivity for each silicon composite was measured.

**[Table 3]**

| | Example 1 (Graphene Shell Film Formation O) | Comparative Example 3 (Graphene Shell Film Formation X) |
|---|---|---|
| Electrical conductivity (x10⁴ S/cm) | 4.63 | 1.28 |

Referring to Table 3 above, the silicon composite of Example 1 exhibited a high electrical conductivity.

### <Experimental Example 5-1>

Lithium coin half cells were manufactured with the silicon composites of Example 1 and Comparative Example 3, respectively under the conditions of Experiment Example 3, and the capacity and initial efficiency were measured. The measurement results are shown in FIG. 5 and Table 3.

**[Table 4]**

| | Capacity (mAh/g) | Initial efficiency (%) |
|---|---|---|
| Comparative Example 3 (Graphene Shell Film Formation X) | 498.07 | 89.3 |
| Example 1 (Graphene Shell Film Formation O) | 511.2 | 90.22 |

Referring to FIG. 5 and Table 4, it can be seen that the capacity and initial efficiency of the cell using the silicon composite of Example 1 is the highest.

### <Experimental Example 5-2>

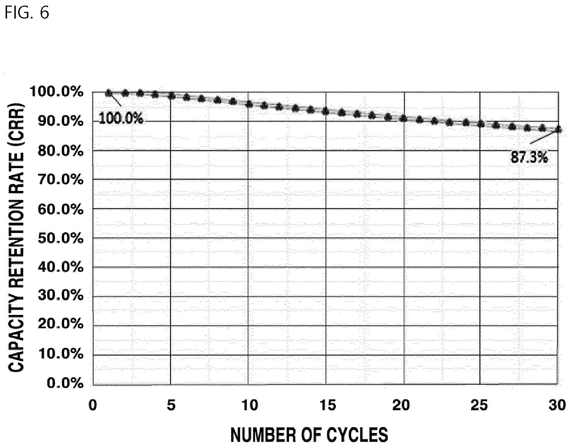

Lithium coin half cells were manufactured with the silicon composite of Example 1 under the conditions of Experiment Example 3, and the capacity retention rate (CRR) according to the number of cycles were measured. The measurement results are shown in FIG. 6 and Table 4.

**[Table 5]**

| Coin Half-Cell | SiGC (calculated value) | | Blending (experiment value) | | CRR (@30cycle) |
|---|---|---|---|---|---|
| | Formation (0.1 C/0.1 C) | | Formation (0.1 C/0.1 C) | | Formation (0.5 C/1.0 C) |
| | Capacity (mAh/g) | Efficiency (%) | Capacity (mAh/g) | Efficiency (%) | % |
| Si/C | 1370 | 88.4 | 511.2 | 90.22 | 87.3 |

Referring to Table 5, it can be seen that the capacity and the capacity retention rate (CCR) of the cell using the silicon composite of Example 1 is the highest.

## Claims

1. An anode active material comprising a silicon composite comprising a core and a shell, the core comprising a needle-shaped silicon nanoparticle and a plate-shaped silicon nanoparticle that differ in aspect ratio and are coated with first crystalline carbon, the shell surrounding the core and comprising amorphous carbon, wherein second crystalline carbon is disposed in the entire area or a local area of the surface of the shell.

2. The anode active material of claim 1, wherein the needle-shaped silicon nanoparticle has an aspect ratio in the range of from greater than 6 to 250, and the plate-shaped silicon nanoparticle has an aspect ratio in the range of from 1 to 6.

3. The anode active material of claim 1, wherein the needle-shaped silicon nanoparticle and the plate-shaped silicon nanoparticle are mixed in a weight ratio of 30:70 to 70:30.

4. The anode active material of claim 1, wherein the amorphous carbon may be contained in an amount in the range of from 5 to 30 parts by weight per 100 parts by weight of the needle-shaped silicon nanoparticle and the plate-shaped silicon nanoparticle.

5. The anode active material of claim 1, wherein the first crystalline carbon is contained in an amount of 0.1 to 80 parts by weight and the second crystalline carbon is contained in an amount of 0.1 to 80 parts by weight, per 100 parts by weight of the needle-shaped silicon nanoparticle and the plate-shaped silicon nanoparticle.

6. The anode active material of claim 1, wherein the silicon composite has an average particle size of 5 to 50 pm.

7. The anode active material of claim 1, wherein the silicon composite has a porosity of 0.1 to 40%.

8. A method of preparing an anode active material, the method comprising the steps of: (a) coating a surface of a needle-shaped silicon nanoparticle and a surface of a plate-shaped silicon nanoparticle with a first crystalline carbon that differ in aspect ratio to prepare a core; (b) adding a precursor of amorphous carbon to the prepared core and performing heat treatment to for a shell made of amorphous carbon and configured to surround the core; and (c) adding second crystalline carbon after forming the shell, and performing heat treatment to prepare a silicon composite in which the entire surface or a partial surface of the shell is provided with the second crystalline carbon.

9. The method of claim 8, wherein the needle-shaped silicon nanoparticle has an aspect ratio in the range of from greater than 6 to 250, and the plate-shaped silicon nanoparticle has an aspect ratio in the range of from 1 to 6.

10. The method of claim 8, wherein the needle-shaped silicon nanoparticle and the plate-shaped silicon nanoparticle are mixed in a weight ratio of 30:70 to 70:30.

11. The method of claim 8, wherein the amorphous carbon is contained in an amount in the range of from 5 to 30 parts by weight per 100 parts by weight of the needle-shaped silicon nanoparticle and the plate-shaped silicon nanoparticle.

12. The method of claim 8, wherein the first crystalline carbon is contained in an amount of 0.1 to 80 parts by weight and the second crystalline carbon is contained in an amount of 0.1 to 80 parts by weight, per 100 parts by weight of the needle-shaped silicon nanoparticle and the plate-shaped silicon nanoparticle.

13. The method of claim 8, wherein the silicon composite has an average particle size of 5 to 50 pm.

14. The method of claim 8, wherein the silicon composite has a porosity of 0.1% to 40%.

15. A lithium secondary battery comprising the anode active material of claim 1.
